# EUROPEAN PATENT APPLICATION

(11) **EP 2 123 351 A1**
(43) Date of publication of application: **25.11.2009**
(21) Application number: 08425333.5
(22) Date of filing: 13.05.2008
(51) Int. Cl.: B01J 8/06, C01B 3/36

(54) **Steam-reforming-based fuel-processing apparatus integrated with burner and steam generator**

(71) Applicant: Electro Power Systems S.p.A., 10091 Alpignano (IT)
(72) Inventor: Quaglia, Alberto, 10137 Torino (IT); Baldini, Luca, 10129 Torino (IT); Santagiuliana, Daniele, 36076 Recoaro Terme (IT); Rosso, Ilaria, 10064 Pinerolo (IT)
(74) Representative: Bergadano, Mirko

(57) **Abstract**

Steam-reforming fuel processing apparatus for the production of hydrogen, particularly for feeding a fuel cell electric power generator, structured as a single shell-and-tube heat exchanger comprising a tube-side portion and a shell-side portion.

The tube-side portion comprises first pre-mixing sections (6,7) operationally couplet in use with at least one secondary combustion section (14) and a cooling section (15) of said shell-side portion. The tube-side portion further comprises second sections of primary reaction (10) and of secondary reaction (11), operationally coupled in use with a primary combustion section (13) and a pre-heating section (12) of said shell-side portion. There is thus achieved in use the thermal integration of the various sections hosting the basic reactions of the steam reforming process with the sections where combustion takes place thus functioning as a burner.

## Description

The present invention refers to the field of fuel processing in view of a subsequent utilisation thereof, commonly known in the art as "fuel processing". In particular, reference is made to the conversion of hydrocarbon-based fuels into a reformate enriched in hydrogen for use in devices and processes consuming hydrogen, e.g. for electricity generation by fuel cells. More particularly, the invention refers to an apparatus wherein a steam reforming reactor is integrated with a burner, a steam generator and a feed pre-heating system, further to the reactor hosting the so-called *water-gas shift* reaction.

Aside from the uses in a plurality of fields as a propellant, as a carrier gas, as a diluent, as a fuel and further as a reducing agent in a number of processes and chemical reactions, hydrogen has long been the object of great attention as an alternative fuel for energy production. Its use is particularly desirable because it is a renewable, abundant, fuel that can be used efficiently and, differently from other fuels, the combustion thereof does not produce pollutant emissions.
Although hydrogen is already widely used and the potential exists for an even greater utilisation thereof, a disadvantage hindering the further increase in hydrogen consumption is the absence of infrastructures that enable its production, storage and distribution at a capillary level.

One way to overcome this difficulty is the generation of hydrogen by means of fuel processors to convert hydrocarbon-based fuels in a hydrogen-rich reformate. Fuel reforming processes, like steam reforming, partial oxidation and autothermal reforming may be used to convert *in situ* hydrocarbon-based fuels like natural gas, GPL, petrol and diesel oil into hydrogen-rich reformate, precisely where hydrogen is necessary.

However, aside from hydrogen, fuel processors typically produce undesired impurities which reduce the value of the reformate produced. For instance, in a conventional steam reforming process, a flow of hydrocarbons fed to the system, such as of methane, natural gas, propane, petrol, naphta or diesel oil, is vaporised (unless it already is in the gaseous state), mixed with steam and passed over a steam reforming catalyst. Most of the flow of hydrocarbons fed to the system is converted into a mixture of hydrogen reformate and impurities such as carbon monoxide and carbon dioxide.

With a view to reducing the carbon monoxide content, the reformate is typically subjected to the so-called "water-gas shift" reaction, i.e. of shifting the gas-water equilibrium, wherein carbon monoxide reacts with steam to form carbon dioxide and hydrogen.

Following, additional purification steps may be used to bring the hydrogen purity to acceptable levels. These purification steps may include, but are not limited to, methanation, selective oxidation reactions, membrane separation techniques and selective adsorption using periodic variations in temperature and/or pressure.

A fuel processing plant based on the steam reforming technology generally comprises:
- a burner for the production of thermal power necessary for the energetic sustenance of the overall process (the latter consists of a combination of exothermic and endothermic contributions, the sum of which equals the energetic supply required by the system);
- a first steam reforming (SR) reactor, wherein the flow of hydrocarbons supplied is converted by reacting with steam into a gaseous mixture rich in hydrogen, according to a reaction (shown for the case where the hydrocarbon flow supplied contains essentially methane) of the type:

   CH₄ + H₂O → CO + 3H₂ (1)
- a second "water-gas shift" (WGS) reactor, wherein carbon monoxide is converted, by reacting again with steam, thereby enriching the gaseous mixture in hydrogen:

   CO + H₂O → CO₂ + H₂ (2)
- a third reactor (CO-PROX) of carbon monoxide preferential oxidation, wherein there is favoured the selective oxidation of the CO present in the mixture to carbon dioxide, according to the exothermic reaction:

   CO + ½ O₂ → CO₂ (3)
- a plurality of heat exchangers, in particular at least a vaporization heat exchanger to obtain the steam flow to supply, together with the hydrocarbon flow, to the SR reactor, and generally other heat exchangers designed so as to improve the degree of energetic interaction among the various portions of the system (e.g. for the pre-heating of the reagents to supply to the SR reactor by using the residual heat of the flue gases, with a view to recovering the heat produced in the second and third reactor, etc.).

From the viewpoint of construction and processing, the manufacture of a steam reforming plant entails a number of difficulties related to the need to minimise thermal dispersions, mechanical and thermal stresses the various apparatuses are subjected to, in use. Further, a conventional steam reforming plant is generally rather cumbersome and heavy.

The SR reaction is matter-of-factly strongly endothermic and thus favoured by high temperatures. For this reason, the SR reactor generally consists of a heat exchanger, wherein the combustion fumes coming from the burner heat the reaction mixture up to the reaction temperature, providing both sensible heat for heating and the reaction heat corresponding to reaction (1).

Given the need to reach high temperatures (around 800°C) to censure a good degree of methane conversion, the heat exchange within the SR reactor represents a particularly critical aspect, as much as the mechanical resistance of materials and joints. To achieve such temperatures in a compact system, in fact, it is necessary that combustion gases be at very high temperatures in the range 900-1000°C), at which normal stainless steels have thermal and mechanical stability issues, often resulting in the formation of cracks and breaks.

Such problem may however be solved by using, for the parts exposed to the highest temperatures, super-alloys and special steels (like Inconel), but the increase of construction costs related to the use of those materials strongly limits the economical competitiveness of the systems thus manufactured and, in particular, it limits their penetration into the market.

The thermal power Q exchanged in a generic heat exchanger may generically be expressed as:

Q =U·A· (LMTD (4)

wherein U indicates the heat exchange coefficient, A represents the exchange surface area and LMTD indicates the logarithmic mean temperature difference of the exchanger inlet and outlet temperatures.

The power exchanged being equal, it appears from the heat exchange equation (4) that it is possible to reduce significantly the LMTD as long as the product U·A is correspondingly increased. Since, due to process needs, inlet and outlet temperatures for the gases involved in the reaction are fixed, a reduction of LMTD is substantially equivalent to a reduction of the temperature of the fumes at the burner outlet, or to a limitation of the thermal and mechanical stresses on the structure of the burner itself as discussed above.

It is therefore possible, according to the operating modes known and commonly used in the art, to resort to different strategies to increase the product U·A, as for example by increasing the exchange surface area by increasing the size of the exchanger or by modifying the geometry thereof, or by favouring the increase of the exchange coefficient by modifying the fluid dynamics of the fluids flowing across the exchanger, or the very mechanism at the basis of the thermal exchange (e.g. by using highly turbulent conditions) or further by resorting to mixed solutions, e.g. by finning the surface of the tubes, which simultaneously induces an increase in the exchange coefficient and provides a greater surface area for the exchange itself.

Solutions of the type described above, however, do not reduce substantially the overall size of the plant.

In particular, most of the conventional solutions provide for the installation of an exchanger external to the steam reforming reactor to pre-heat the flow entering the reactor up to the temperatures suitable for the reaction (500-700°C), at the expense of the heat carried by the hot gases produced by the burner. The reactor further needs to have a big size and work at high temperature; it has therefore issues of thermal insulation with consequent heat losses from the piping. Further, another external heat exchanger is usually necessary to reduce the reformate temperature (down to 400-500°C) so that the ideal conditions for reaction (2) subsist. That second exchanger is generally associated with problems related to the materials to be used, further to the difficulties related to heat transfer when air is used, so it is difficult to minimise the heat dispersion.

Ultimately, the flow rate of hydrocarbon-based fuel processed being equal, the fraction of generated heat that heats the still massive metallic structure of the apparatuses remains high, and it cannot be advantageously used to satisfy the thermal needs of the chemical process itself. Consequently, also unfavourable remain from the point of view of thermal and mechanical resistance the operating conditions for the materials of which the apparatuses, and particularly the burner, are made. There exists therefore in the art the need for a steam reforming apparatus capable of minimising the thermal dispersions detected at the level of the heat exchangers and of the piping and which enables an encumberment reduction.

It is therefore an object of the present invention to provide an apparatus for fuel processing by steam reforming which enables the above drawbacks to be overcome.

In particular, it is an object of the present invention to provide an apparatus for fuel processing by steam reforming entailing operating conditions that are, in the light of the thermal and mechanical resistance of the materials employed, less stressing for the latter, with a consequently reduced or null need to resort to special steels with higher properties but significantly more expensive, ensuring at the same time a reduced weight and encumberment, with reduced thermal dispersion and keeping unchanged, with respect to conventional solutions, the yields and degree of conversion in the very reactor.

According to the present invention there is therefore provided a steam reforming fuel processing apparatus according to claim 1.

In particular, according to the invention there is therefore provided a steam-reforming fuel processing apparatus for the production of hydrogen, particularly for feeding a fuel cell electric power generator, structured as a single shell-and-tube heat exchanger comprising a tube-side portion and a shell-side portion.

The innovative structure of the apparatus for fuel processing by steam reforming which operationally couples different portions of the apparatus itself thus promoting the thermal integration of distinct phases of the process leads consequently to an increased overall efficiency with respect to embodiments known in the art. According to the invention, there is further reduced the number of distinct components forming the apparatus and, consequently, also the overall encumberment of the apparatus is reduced. From the mechanical viewpoint, further, the fact of working at lower temperatures or, however, with a more efficient carry-out of the heat from the apparatus sections which are thermally more stressed, and which is efficiently used again in other portions of the apparatus, results in lesser thermal stresses in particular at the most critical spots, such as weldings, etcetera.

Further characteristics and advantages of the present invention will appear from the following description of some non-limitative embodiments thereof which is given with reference to the figures of the attached drawings, wherein:
Figure 1 is a schematic representation of the steam reforming fuel processing apparatus of the invention, showing the arrangement of the sections into which it is virtually divided, in a first embodiment thereof;
Figure 2 is a cross-section schematic representation of the embodiment of the fuel processing apparatus of Figure 1;
Figure 3 is a cross-section schematic representation of a second embodiment of the fuel processing apparatus according to the invention.

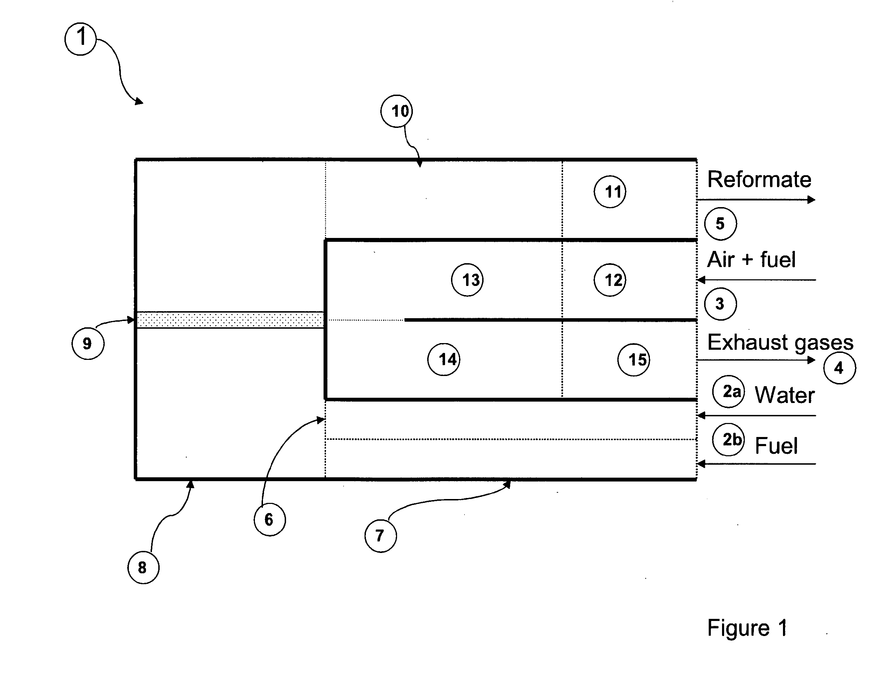

In figure 1 there is indicated as a whole as 1 a steam reforming fuel processing apparatus, substantially structured as a single tube-and-shell heat exchanger.

Therein evidenced are the various sections into which the tube-side (also tube-side portion of the apparatus) and the shell-side (also shell-side portion of the apparatus) are subdivided, which, in use, host the reforming process reactions, or host the heat exchanges ruling the process in the way described above. As a consequence, there is as a matter of fact achieved a "shell-and-tube" type geometry with a double passage on the tube-side and on the shell-side, by feeling the gases in countercurrent.

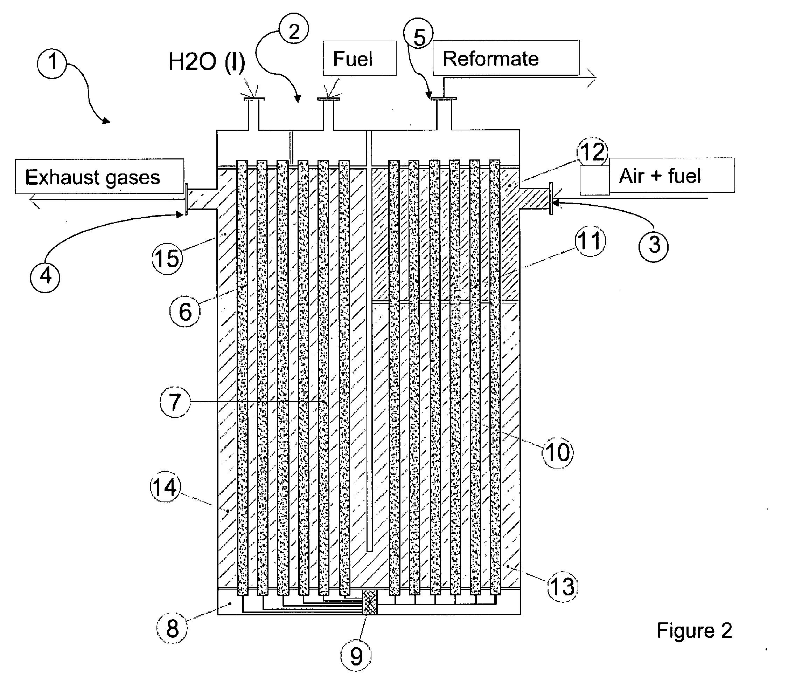

More particularly, apparatus 1 (figures 1 and 2) comprises a first inlet 2 for the feed of H₂O and hydrocarbon-based fuel and a second inlet 3, destined to the feed to the system of hydrocarbon-based fuel and air; further, the apparatus 1 comprises a first outlet 4 for discharging the fumes produced by the combustion of the hydrocarbon-based fuel with air, and a second outlet 5 for the recovery of the hydrogen-rich reformate, the main product of the process.

In the first tube-side passage there are achieved, in parallel, the steam generation inside a first section 6 of steam generation and the pre-heating of the hydrocarbon feed, inside a second section 7 of pre-heating As a consequence, it is necessary that the geometry of the passage sections of the tubes in the first passage ensure a high heat exchange coefficient.

For that, for the first passage, tubes having a lesser diameter with respect to those of the second passage may be used, but the resulting asymmetry might have negative and undesirable effects in the mechanical resistance of the reactor, due to different thermal dilations in the use cycles. Preferably, therefore, to favour a high exchange coefficient, according to the invention there are used tubes for the first passage having the same diameter of those used for the second passage, but filled with a suitable inert material (e.g. non porous pellets, metallic foams, etcetera) whose presence reduces the available section and increases the tortuosity of the gas path, thus increasing the flow turbulence.

In the second passage, in series to the first passage, there occur the steam reforming reaction (1) - substantially in correspondence to section 10 - and the high temperature water-gas shift reaction (2) - substantially in correspondence to section 11. For such second passage, tubes are filled, instead of with inert material, with catalytic material (the catalytic phase is generally dispersed over pellets or on metallic foams).

The steam generation section 6 and the second pre-heating section 7 together form a pre-mixing section, meaning that they are arranged upstream the section wherein the very mixing of the gases to be fed, next, to the apparatus portion hosting the main reactions of the steam reforming process, is achieved.

Section 8, to which gases from the first tube-side passage having crossed chambers 6 a 7 are fed, has the function of mixing the gases, thus representing a distribution chamber for the gases which then run along the tubes of the second passage.

Within chamber 8 a porous septum 9 may be inserted which may be flown across by the reacting gases, in order to ensure a mixing thereof as homogeneous as possible and their re-distribution as they subsequently enter section 10.

According to the invention, further, also mixing chamber 8, as the steam generation section and the pre-heating section 7 are filled with inert filling material (e.g. metallic foam). The presence of such fillingimproves turbulence thereby favouring mixing and improves the thermal exchange, introducing a further advantage with respect to solutions known in the art.

In the first shell-side passage there take place, in series, the pre-heating of the feed (premixed) to the burner - substantially in correspondence to the pre-heating section 12- and the combustion of the gaseous mixture itself - substantially in correspondence to the combustion section 13. In this section the shell containing the tube bundle is filled with a porous material that may be flown across by the gases (e.g. a metallic foam) which has a high exchange surface and high thermal conductivity. Over such material there is further deposited an oxidation/combustion catalyst.

In the second shell-side passage, there takes place instead the completion of the mixture combustion - substantially in correspondence to the combustion completion section 14 - followed by the cooling of the combustion fumes - substantially in correspondence to the fume cooling section 15. Also in sections 14 and 15, the shell run across by the tubes is preferably filled with the same porous material that may be flown across by the gases.

It will appear that the reciprocal arrangement of the sections described so far enables the achievement of an apparatus 1 of fuel processing by steam reforming particularly compact and which achieves the thermal integration of the various steps of the process. Indeed, sections 6 and 7 of the first tube-side passage receive heat from sections 14 and 15 of the second shell-side passage, with the pre-heating of the reagents (water and hydrocarbon-based fuel) to be fed to the section hosting the main reactions of the process (1) and (2) and the simultaneous completion of the combustion (by carrying off the heat the exothermic reaction is favoured) and finally the cooling of the fumes.

Similarly, after the mixing and re-distribution of the reagents attained in section 8, possibly by using the porous septum 9, sections 10 and 11 of the second tube-side passage, which host reactions (1) and (2) of the "steam reforming" process respectively, exchange heat with corresponding sections 13 and 12 of the first shell-side passage. In particular, section 10 hosting reaction (1), sensibly endothermic, is in fact in use couplet with section 13, hosting instead a first exothermic combustion phase. Similarly, section 11 hosting the "water-gas shift" phase, which is exothermic, is in use couplet with section 12, to which it yields heat to pre-heat air and fuel entering the portion of tube-side passage substantially functioning as a burner.

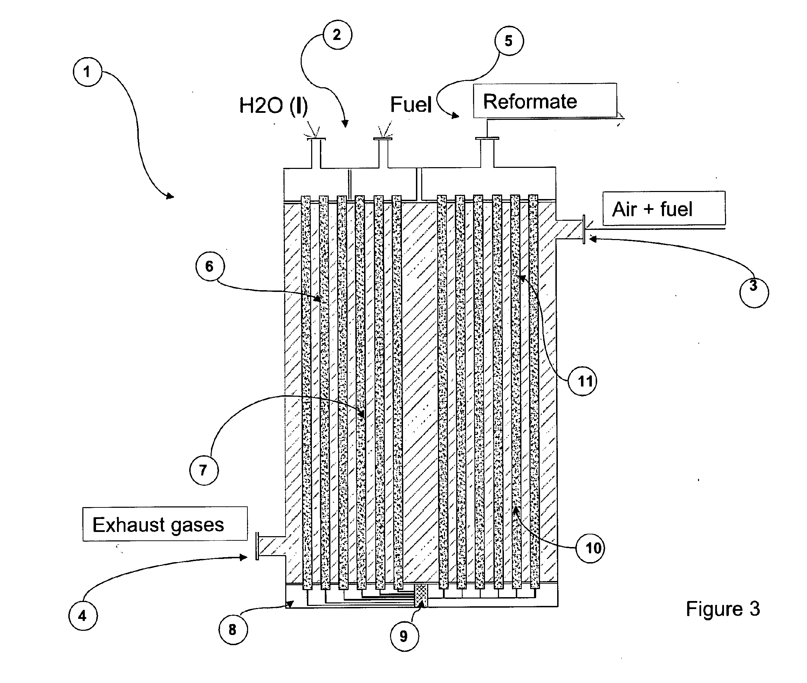

According to an alternative embodiment of the present invention (Figure 3) there is achieved a double passage on the tube-side together with a single passage on the shell-side. Such configuration presents, in a way that is completely similar to that described above for the first embodiment, the functioning of the tube-side. To that a different functioning mode on the shell-side is coupled.

In this case there is in fact achieved a hybrid condition between countercurrent and equicurrent, with the advantage of minimising the head losses on the shell side as a result of the reduction of the gases path within the reactor, while maintaining a substantial coupling of the various sections according to what described above thanks to the shifting toward the end provided with the porous septum 9 of the outlet for the exhaust gases and the consequent re-stirring for natural convection that may then occur on the shell-side.

In both embodiments of the invention however it is also possible to invert the direction of the flow on the shell-side thus passing, in the first case, from a countercurrent feed to an equicurrent feed.

## Claims

1. Steam-reforming fuel processing apparatus (1) for the production of hydrogen, particularly for feeling a fuel cell electric power generator, **characterised by** being structured as a single shell-and-tube heat exchanger comprising a tube-side portion and a shell-side portion.

2. Apparatus (1) according to claim 1,
**characterised in that** said tube-side portion comprises a plurality of tubes to which, through a first inlet (2), a predetermined flow of water and of a first hydrocarbon-based fuel may be fed, and which is fluidically connected to a first outlet (5).

3. Apparatus (1) according to claim 1 or 2,
**characterised in that** said shell-side portion enables fluidic communication between a second inlet (3), through which to the apparatus a predetermined flow of air and of a second hydrocarbon-based fuel may be fed, , and a second outlet (4).

4. Apparatus (1) according to one of the foregoing claims, **characterised in that** said tube-side portion comprises first pre-mixing sections (6,7), operationally coupled in use with at least a secondary combustion section (14) and a cooling section (15) of said shell-side portion, so as to enable the heat exchange wherein said secondary combustion section (14) and said cooling section (15) substantially yield heat to said first sections (6,7) of the tube-side portion.

5. Apparatus (1) according to one of the foregoing claims, **characterised in that** said tube-side portion further comprises a mixing chamber (8), possibly provided with a porous septum (9).

6. Apparatus (1) according to one of the foregoing claims, **characterised in that** said tube-side portion further comprises second sections (10) of primary reaction and (11) of secondary reaction, operationally couplet in use with a primary combustion section (13) and a pre-heating section (12) of said shell-side portion, respectively, so as to achieve the heat exchange wherein said primary combustion section (13) substantially yields heat to said primary reaction section (10) and said secondary reaction section (11) yields heat to said pre-heating section (12).

7. Apparatus (1) according to claims 4, 5 and 6 **characterised in that** said tubes of said first plurality of tubes, in correspondence of said first sections (6,7,8) of said tube-side portion are filled with an inert filling material.

8. Apparatus (1) according to claims 4, 5 and 6, **characterised in that** said tubes of said plurality of tubes, in correspondence of said second sections (10,11) of the tube-side portion, are filled with a suitably catalysed filling material.

9. Apparatus (1) according to claim 6 or 7,
**characterised in that** said tube-side portion, in correspondence to said secondary combustion section (14) and cooling section (15), is filled with an inert filling material.

10. Apparatus (1) according to one of claims 6 to 8, **characterised in that** said shell-side portion, in correspondence to at least said primary combustion section (13), is filled with a suitably catalysed filling material.
